# EUROPÄISCHE PATENTSCHRIFT

(11) **EP 0 960 550 B1**
(45) Veröffentlichungstag und Bekanntmachung des Hinweises auf die Patenterteilung: **11.05.2005**
(21) Anmeldenummer: 98909275.4
(22) Anmeldetag: 22.01.1998
(51) Int. Cl.: H04Q 11/04

(54) **TEILNEHMERSEITIGE NETZABSCHLUSSEINHEIT EINES ANSCHLUSSLEITUNGSNETZES UND VERFAHREN ZUM BETREIBEN EINER NETZABSCHLUSSEINHEIT**
SUBSCRIBER NETWORK TERMINAL OF AN ACCESS LINE NETWORK AND METHOD FOR OPERATING A NETWORK CONNECTING UNIT
APPAREIL TERMINAL D'UN RESEAU DE RACCORDEMENT POUR ABONNE ET PROCEDE PERMETTANT DE FAIRE FONCTIONNER L'APPAREIL TERMINAL

(30) Priorität: 17.02.1997 DE 19706071
(43) Veröffentlichungstag der Anmeldung: 01.12.1999
(73) Patentinhaber: SIEMENS AKTIENGESELLSCHAFT, 80333 München (DE)
(72) Erfinder: HUBER, Manfred, D-82152 Krailling (DE)
(86) Internationale Anmeldenummer: PCT/DE1998/000198
(87) Internationale Veröffentlichungsnummer: WO 1998/036610

(56) Entgegenhaltungen:
- EP-A- 0 659 007
- WO-A-98/07292
- US-A- 5 229 992
- HUBER M N ET AL: "MODELLING OF A MULTI-QUEUE POLLING SYSTEM WITH ARBITRARY SERVER INTERRUPTS FOR THE IDLE-SLOT-CONCATENATION PACKET SWITCHING PRINCIPLE IN A HYBRID CS/PS NODE" PROCEEDINGS OF THE TWELFTH INTERNATIONAL TELETRAFFIC CONGRESS (ITC-12), Bd. 1, 1. - 8. Juni 1988, Seiten 521-528, XP000279785 TORINO in der Anmeldung erwähnt

## Beschreibung

Die Erfindung betrifft eine teilnehmerseitige Netzabschlußeinheit eines Anschlußleitungsnetzes mit einer Schnittstelle zum anschlußleitungsnetzseitigen Senden und Empfangen eines Übertragungsrahmens mit einer Vielzahl von Datenkanälen einschließlich einem Signalisierungskanal, mit einer Schnittstelle zum teilnehmerseitigen Bereitstellen von Telekommunikationsnutzdatenkanälen für Telekommunikationsanwendungen sowie eines diesen Telekommunikationsnutzdatenkanälen zugeordneten Signalisierungskanals, und mit einer Schnittstelle zum teilnehmerseitigen Bereitstellen von Datenkanälen für Datenanwendungen. Außerdem betrifft die Erfindung ein Verfahren zum Betreiben einer solchen teilnehmerseitigen Netzabschlußeinheit eines Anschlußleitungsnetzes.

Moderne Telekommunikationsnetze verfügen im Teilnehmeranschlußbereich über digitale Anschlußleitungsnetze, die eine oder mehrere Ortsvermittlungsstellen über Teilnehmeranschlußleitungen und teilnehmerseitige Netzabschlußeinheiten mit Teilnehmerendeinrichtungen verbinden. Anschlußleitungsnetze wurden ursprünglich zur Übertragung niederfrequenter Informationssignale, wie beispielsweise beim analogen Fernsprechen oder bei der Verwendung von Schmalbanddiensten, konzipiert. Die im Anschlußleitungsnetz auf der Teilnehmerseite übertragene Bitrate ist hierbei beispielsweise für einen Schmalband-ISDN-Basiszugang derart festgelegt, daß die längsten vorkommenden Anschlußleitungen noch genutzt werden können. Ein besagter Schmalband-ISDN-Basiszugang, der auch mit BA (vom englischsprachigen Ausdruck "Basic Access") bezeichnet wird, hat, abgesehen von für Synchronisations- und Echounterdrückungszwecke verwendeten Datenraten von 16 kbit/s, eine Datenrate von 144 kbit/s, aufgeteilt in einen mit D-Kanal bezeichneten Steuerkanal mit 16 kbit/s und zwei als B-Kanäle bezeichnete Nutzkanäle mit je 64 kbit/s. Aufgrund dieser Dimensionierungsgrundlage bleibt ein großer Teil der maximal zuverlässig übertragbaren Bitrate, d.h. der maximalen Bandbreite im Anschlußleitungsnetzbereich mit kürzeren Anschlußleitungen, ungenutzt. Das die Reichweite der Digitalsignalübertragung begrenzende Dämpfungsmaß für symmetrische Doppeladern von Kupferanschlußleitungen nimmt nämlich mit der Leitungslänge zu. Generell gilt, je kürzer die Länge einer Teilnehmeranschlußleitung um so höher kann die darüber zu übertragende Bitrate sein. Für Schmalbanddienste konzipierte Anschlußleitungsnetze eignen sich folglich auch für die Übertragung breitbandigerer Dienste. So haben sich in den letzten Jahren Verfahren durchgesetzt, mit denen die vorhandenen Kupferleitungen im Anschlußleitungsnetz für die Übertragung von digitalen Informationssignalen genutzt werden können.

Aus Vittorio Ferretti, Guillermo Wichmann, "Mehrfachnutzung von Teilnehmeranschlußkabeln", Telcom report 14(1991), Heft 3, Seite 150 bis 153, ist ein Verfahren zum Aufteilen der nutzbaren Datenrate eines ISDN-BA von 144 kbit/s in einen mit D-Kanal bezeichneten Steuerkanal und wahlweise zwei Nutzkanale mit je 32 kbit/s und einen, bevorzugt für Datenanwendungen vorgesehenen Nutzkanal mit 64 kbit/s Datenrate oder vier Nutzkanäle mit je 32 kbit/s Datenrate beschrieben. Dadurch wird zwar die Anzahl der über ein Leitungspaar und eine spezielle Netzabschlußeinheit anschließbaren Anwendungen, Endgeräte oder Teilnehmer erhöht, die Datenrate, die einer Anwendung zur Verfügung steht, wird aber gegenüber einem ISDN BA verringert oder bleibt im günstigsten Fall gleich groß.

Das Anschließen von Datenverarbeitungseinrichtungen, wie zum Beispiel eines Computers oder eines LAN an ein Anschlußleitungsnetz eines Kommunikationsnetzes erfolgt heute für Kleinbetriebe oder Privathaushalte meist über, ein Modem und eine geschaltete analoge oder digitale Verbindung oder über eine ISDN-Verbindung mit einer maximal erzielbaren Datenrate von 128 kbit/s.

Aus der europäischen Patentanmeldung EP-A2-0 659 007 ist z.B. ein ISDN-Adapter bekannt, der das Modem-Signal eines Teilnehmers in ein digitalisiertes Signal umwandelt, das dann über einen ISDN-B-Kanal übertragen wird. Der ISDN-Adapter ermöglicht es einem Teilnehmer, über ein ISDN-Netz Verbindungen sowohl zu digitalen als auch zu analogen Geräten herzustellen.

Aus der zum Prioritätstag der vorliegenden Anmeldung noch nicht veröffentlichten Patentanmeldung DE 196 25 385.3 ist ein Verfahren zum Übertragen von Informationssignalen in einem Anschlußleitungsnetz über Teilnehmeranschlußleitungen bekannt, bei dem Übertragungsparameter der Teilnehmeranschlußleitung gemessen und nach Maßgabe der Meßergebnisse vermittlungsseitig und teilnehmerseitig Einstellungen vorgenommen werden. Diese Einstellungen sind beispielsweise die maximal sicher übertragbare Bitrate und gegebenenfalls das Übertragungsverfahren. Dadurch können Bitrate und Übertragungsverfahren leitungsindividuell in Abhängigkeit von den physikalischen Übertragungsparametern adaptiv vorgenommen werden. Somit wird es möglich, zusätzlich zu einem D-Kanal mit einer Bandbreite von 16 kbit/s noch mehrere Nutzkanäle jeweils mit einer Bandbreite von 64 kbit/s zu übertragen. Die maximal übertragbare Anzahl der Nutzkanäle hängt hierbei von der Bandbreite der individuellen Teilnehmeranschlußkonfiguration ab, insbesondere von der Länge der Teilnehmeranschlußleitung.

Als Verfahren zur teilnehmerseitigen Informationsübertragung in solchen Anschlußleitungsnetzen ist es aus dem Artikel von M.N. Huber und P.J. Kühn, "Modelling of a Multi-Queue Polling System with Arbitrary Server Interrupts for the Idle-Slot-Concatenation Packet Switching Principle in a Hybrid CS/PS Node", Proceedings of the 12th International Teletraffic Congress, Torino, 1988, bekannt, einen in gleich große Zeitschlitze aufgeteilten Informationstransportrahmen vorzusehen.

Jeder dieser Zeitschlitze wird entweder mit Vermittlungssystem-Daten (CS-Daten vom englischsprachigen Ausdruck Circuit Switching) oder mit Paketdaten (PS-Daten vom englischsprachigen Ausdruck Packet Switching) belegt, wobei alle nicht mit Vermittlungssystem-Daten belegten Zeitschlitze zu einem verbleibenden Paketdaten-Transportkanal zusammengefaßt werden (Idle Slot Concatenation). Der Verkehrstyp, von dem der verbleibenden Paketdaten-Transportkanal belegt wird, z.B. ATM oder LAN/Ethernet, ist durch die Anschlußkonfiguration, insbesondere durch das von der teilnehmerseitigen Protokollauswerteeinrichtung bearbeitbare Paketdaten-Protokoll festgelegt.

In einer zum Anmeldetag dieser Anmeldung nicht veröffentlichten Patentanmeldung desselben Anmelders wird ein Verfahren zur teilnehmerseitigen Informationsübertragung in einem Anschlußleitungsnetz mit Hilfe eines in gleich große Zeitschlitze aufgeteilten Informationstransportrahmens beschrieben, wobei mindestens ein Teil dieser Zeitschlitze Nutzkanal-Zeitschlitze sind, von denen jeder entweder mit Vermittlungssystem-Daten oder mit Paketdaten belegt wird und alle nicht mit Vermittlungssystem-Daten belegten Nutzkanal-Zeitschlitze zu einem verbleibenden Paketdaten-Transportkanal zusammengefaßt werden. In jeden Zeitschlitz des verbleibenden Paketdaten-Transportkanals wird ein Protokolldiskriminator eingefügt, der ein eindeutiges Zuordnen der in einem Zeitschlitz des verbleibenden Paketdaten-Transportkanals enthaltenen Daten zu einem Verkehrstyp ermöglicht, so daß empfangsseitig jeweils eine verkehrstypspezifische Protokollauswertung vorgenommen werden kann. Dies ermöglicht die Nutzung des verbleibenden Paketdaten-Transportkanals, der auch ISC-Kanal oder Idle-Slot-Concatenation-Kanal genannt wird, durch unterschiedliche Verkehrstypen, wie zum Beispiel ATM und LAN. Gegebenenfalls kann bei Nachrichten variabler Länge zusätzlich eine pro Nachricht eingefügte Längenangabe übermittelt werden. Eine andere Variante eines solchen Verfahrens sieht zur Übertragung von Nachrichten variabler Länge vor, im verbleibenden Paketdaten-Transportkanal zwischen zwei Nachrichten jeweils einen Zeitschlitz des verbleibenden Paketdaten-Transportkanals nicht zu belegen. Hierbei kann auch ein Zeitschlitz des Informationstransportrahmens zur Rahmensteuerung und ein Zeitschlitz zur ISDN-Signalisierung verwendet werden, wobei dann diese zur Übertragung von Steuerinformation vorgesehenen Zeitschlitze vorzugsweise innerhalb des Informationstransportrahmens an fest definierten Stellen angeordnet sind.

Aufgabe der Erfindung ist das Angeben einer teilnehmerseitigen Netzabschlußeinheit eines Anschlußleitungsnetzes, das ein mehrere Nutzkanäle bereitstellendes Anschlußleitungsnetz an Teilnehmeranwendungen anpaßt, um eine flexiblere Nutzung eins solchen Anschlußleitungsnetzes für Telekommunikationsanwendungen und Datenanwendungen zu ermöglichen. Außerdem soll ein Verfahren zum Betreiben einer solchen Netzabschlußeinheit angegeben werden.

Die Erfindung definiert eine teilnehmerseitige Netzabschlußeinheit eines Anschlußleitungsnetzes mit einer ersten, von einer Anschlußleitungsschnittstellensteuerung bereitgestellten Schnittstelle zum anschlußleitungsnetzseitigen Senden und Empfangen eines eine Vielzahl von Datenkanälen einschließlich eines Signalisierungskanals enthaltenden Übertragungsrahmens, mit einer zweiten, von einer Telekommunikationsschnittstellensteuerung bereitgestellten Schnittstelle zum teilnehmerseitigen Bereitstellen von Telekommunikationsnutzdatenkanälen für Telekommunikationsanwendungen sowie eines diesen Telekommunikationsnutzdatenkanälen zugeordneten Signalisierungskanals, und mit einer dritten, von einer Datenschnittstellensteuerung bereitgestellten Schnittstelle zum teilnehmerseitigen Bereitstellen von Datenkanälen für Datenanwendungen.

Ein erfindungsgemäßes Verfahren zum Betreiben einer solchen teilnehmerseitigen Netzabschlußeinheit sieht vor, daß vor der Übertragung von Nutzdaten über die zweite Schnittstelle oder die dritte Schnittstelle jeweils den Nutzdaten zugeordnete Signalisierungsdaten über den Signalisierungskanal der von der Telekommunikationsschnittstellensteuerung bereitgestellten Schnittstelle übertragen werden.

Eine erfindungsgemäße teilnehmerseitige Netzabschlußeinheit, die die Durchführung eines solchen Verfahrens ermöglicht, aber auch unabhängig von dem genannten Verfahren einen Aspekt der Erfindung wiedergibt, enthält eine Steuervorrichtung zum Freigeben einer Datenübertragung über die Datenschnittstellensteuerung, nachdem eine dieser Datenübertragung zugeordnete Signalisierung über den Signalisierungskanal der zweiten Schnittstelle erfolgt ist.

Durch ein solches erfindungsgemäßes Verfahren und in einer solchen erfindungsgemäßen teilnehmerseitigen Netzabschlußeinheit wird der Signalisierungskanal der zweiten Schnittstelle sowohl als Signalisierungskanal für die Telekommunikationsnutzdatenkanäle der zweiten Schnittstelle als auch als Signalisierungskanal für die Nutzdatenkanäle der dritten Schnittstelle verwendet. Dies ermöglicht eine einfache Abbildung der beiden teilnehmerseitigen Schnittstellen auf eine einzige anschlußleitungsnetzseitige Schnittstelle mit nur einem Signalisierungskanal, wobei für jede der teilnehmerseitigen Schnittstellen im Bedarfsfall ein Signalisierungskanal, nämlich der der zweiten Schnittstelle, zur Verfügung steht. Da ein Signalisierungskanal üblicherweise nur kurzzeitig, nämlich während der Signalisierungsphase benötigt wird und Signalisierungsdaten unproblematisch bezüglich Verzögerungszeiten sind, genügt ein Signalisierungskanal auch für zwei Schnittstellen.

Eine Weiterbildung des erfindungsgemäßen Verfahrens sieht vor, daß die Datenschnittstellensteuerung die Übertragung von über die dritte Schnittstelle zu übertragenden Nutzdaten zugeordneten Signalisierungsdaten über den Signalisierungskanal der von der Telekommunikationsschnittstellensteuerung bereitgestellten Schnittstelle steuert, bevor diese Nutzdaten über die dritte Schnittstelle übertragen werden. Ein Steuern der Übertragung der für Daten der dritten Schnittstelle vorgesehenen Signalisierungsdaten über den Signalisierungskanal der zweiten Schnittstelle ermöglicht es, daß die Datenanwendung, beispielsweise ein Computer oder ein LAN mit angeschlossenen Computern, nur über eine einzige Schnittstelle, nämlich die genannte dritte Schnittstelle, auf die teilnehmerseitige Netzabschlußeinheit zuzugreifen braucht. Eine alternative Ausführungsform eines solchen Verfahrens erfordert, daß die Datenanwendung über die dritte Schnittstelle auf die teilnehmerseitige Netzabschlußeinheit zugreift und zumindest über den Signalisierungskanal der zweiten Schnittstelle zugreift. Der Zugriff über die zweite Schnittstelle kann hierbei beispielsweise durch das Betreiben der Datenanwendung als Kommunikationsendgerät an der zweiten Schnittstelle erfolgen.

Eine andere Weiterbildung des erfindungsgemäßen Verfahrens sieht vor, daß teilnehmerseitig in den Telekommunikationsnutzdatenkanälen der zweiten Schnittstelle übertragene Daten im anschlußleitungsnetzseitigen Übertragungsrahmen nur in bestimmten Datenkanälen übertragen werden. Dadurch wird eine feste Zuordnung der Nutzdatenkanäle der zweiten Schnittstelle zu Datenkanälen des Übertragungsrahmens der ersten Schnittstelle und somit ein einfaches Umsetzen zwischen Kanälen dieser teilnehmerseitigen Schnittstelle und Kanälen der anschlußleitungsnetzseitigen Schnittstelle ermöglicht. Hierbei empfiehlt es sich, daß auch der Signalisierungskanal der zweiten Schnittstelle einem Datenkanal oder einem Signalisierungskanal des Übertragungsrahmens der ersten Schnittstelle fest zugeordnet ist.

Eine vorteilhafte Weiterbildung dieses Aspektes der Erfindung sieht vor, daß teilnehmerseitig in den Datenkanälen der dritten Schnittstelle übertragene Daten im anschlußleitungsnetzseitigen Übertragungsrahmen bevorzugt in freien, nicht für die Übertragung von teilnehmerseitig in den Telekommunikationsnutzdatenkanälen der zweiten Schnittstelle übertragenen Daten vorgesehenen Datenkanälen übertragen werden. Dies ermöglicht auch eine feste Zuordnung bestimmter Datenkanäle des Übertragungsrahmens der ersten Schnittstelle zu den Datenkanälen der dritten Schnittstelle und somit ein erleichtertes Umsetzungsverfahren zwischen diesen Schnittstellen.

Eine konsequent feste Zuordnung aller Datenkanäle der dritten Schnittstelle zu Datenkanälen des Übertragungsrahmens der ersten Schnittstelle könnte jedoch eventuell die für Datenanwendungen zur Verfügung gestellte Bandbreite bzw. Datenrate zu sehr einschränken. Deshalb sieht eine abgewandelte Ausgestaltung dieses Aspektes der Erfindung vor, daß teilnehmerseitig in den Datenkanälen der dritten Schnittstelle übertragene Daten auch in den für die Übertragung von teilnehmerseitig in den Telekommunikationsnutzdatenkanälen der zweiten Schnittstelle übertragenen Daten vorgesehenen Datenkanälen übertragen werden, falls im anschlußleitungsnetzseitigen Übertragungsrahmen für diese Daten nicht genügend, nicht für die Übertragung von teilnehmerseitig in den Telekommunikationsnutzdatenkanälen der zweiten Schnittstelle übertragene Daten vorgesehene Datenkanäle frei sind. Wenn bei einer solchen Weiterbildung der Erfindung für eine Datenanwendung nicht genug Bandbreite durch den Datenkanälen der dritten Schnittstelle fest zugeordnete Datenkanäle des Übertragungsrahmens der ersten Schnittstelle zur Verfügung gestellt werden, werden auch den Nutzdatenkanälen der zweiten Schnittstelle fest zugeordnete Datenkanäle des Übertragungsrahmens der ersten Schnittstelle für die Übertragung von Nutzdaten der dritten Schnittstelle verwendet. Ein eventuell dem Signalisierungskanal der zweiten Schnittstelle zugeordneter Datenkanal des Übertragungsrahmens der ersten Schnittstelle darf nicht für die Übertragung von Nutzdaten der dritten Schnittstelle verwendet werden, da dieser Signalisierungskanal auch für diese dritte Schnittstelle benötigt wird.

Eine bevorzugte Ausgestaltungsform einer teilnehmerseitigen Netzabschlußeinheit sieht ferner vor, daß die zweite Schnittstelle teilnehmerseitig zwei Telekommunikationsnutzdatenkanälen für Telekommunikationsanwendungen bereitstellt. Insbesondere, wenn in einer Weiterbildung einer solchen Ausgestaltungsform einer teilnehmerseitigen Netzabschlußeinheit die von der zweiten Schnittstelle bereitgestellten zwei Telekommunikationsnutzdatenkanäle jeweils eine Datenrate von 64 kbit/s haben und der von der zweiten Schnittstelle bereitgestellte Signalisierungskanal eine Datenrate von 16 kbit/s hat, entspricht diese Schnittstelle einer genormten sogenannten So-Schnittstelle gemäß Schmalband-ISDN.

Eine andere Ausgestaltungsform einer teilnehmerseitigen Netzabschlußeinheit sieht vor, daß die erste Schnittstelle anschlußleitungsnetzseitig einen Übertragungsrahmen mit einer Vielzahl von Datenkanälen mit einer jeweiligen Datenrate von 64 kbit/s bereitstellt. Die Umsetzung der anschlußleitungsnetzseitig Datenkanäle in die Nutzdatenkanäle der teilnehmerseitigen zweiten Schnittstelle mit gleicher Übertragungsate kann dadurch sehr einfach ausgeführt werden und reduziert sich bei fester Kanalzuordnung auf ein rein physikalisches Umsetzen.

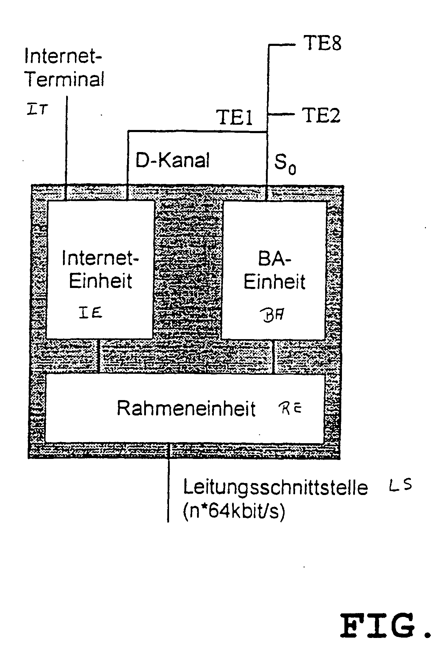

Nachstehend wird die Erfindung unter Bezugnahme auf die Figur an Hand eines Ausführungsbeispiels näher erläutert.

Das in der Figur in Form einer schematischen Blockdarstellung gezeigte Ausführungsbeispiel einer erfindungsgemäßen teilnehmerseitigen Netzabschlußeinheit eines Anschlußleitungsnetzes enthält als erste, von einer mit Rahmeneinheit RE bezeichneten Anschlußleitungsschnittstellensteuerung bereitgestellte Schnittstelle eine (in der Figur unten dargestellte) Leitungsschnittstelle LS zum anschlußleitungsnetzseitigen Senden und Empfangen eines eine Anzahl n von Datenkanälen enthaltenden Übertragungsrahmens. Die einzelnen Datenkanäle dieses Ubertragungsrahmens haben jeweils eine Datenrate von 64 kbit/s. Ein Steuerkanal mit einer Datenrate von 16 kbit/s ist in einem dieser Datenkanäle enthalten, kann aber alternativ auch zusätzlich im Übertragungsrahmen enthalten sein. Außerdem enthält diese Netzabschlußeinheit als zweite, von einer mit BA-Einheit bezeichneten Telekommunikationsschnittstellensteuerung bereitgestellte Schnittstelle So zum teilnehmerseitigen Bereitstellen von Telekommunikationsnutzdatenkanälen für Telekommunikationsanwendungen TE1, TE2, TE8. Diese zweite Schnittstelle So entspricht einer standardgemäßen ISDN-Schnittstelle vom Typ So mit zwei B-Kanälen zu je 64 kbit/s Datenrate und einem D-Kanal mit einer Datenrate von 16 kbit/s. Darüber hinaus enthält diese Netzabschlußeinheit als dritte, von einer mit Internet-Einheit bezeichneten Datenschnittstellensteuerung bereitgestellte Schnittstelle IT zum teilnehmerseitigen Bereitstellen von Datenkanälen für Datenanwendungen.

In dem gezeigten Ausführungsbeispiel greift die Datenschnittstellensteuerung IE wie eine Telekommunikationsanwendung TE1 auf den D-Kanal der zweiten Schnittstelle So zu. Zwischen der Telekommunikationsschnittstellensteuerung BA bzw. der Datenschnittstellensteuerung IE und der Anschlußleitungsschnittstellensteuerung RA ist ein Übergang zum Umsetzen von teilnehmerseitig zu übertragenden Daten und anschlußleitungsnetzseitig zu übertragenden Daten vorgesehen. Hierzu ist vorzugsweise ein Bussystem mit Zeitschlitzstruktur vorgesehen.

Vor der Übertragung von Nutzdaten über die zweite Schnittstelle So werden den Nutzdaten zugeordnete Signalisierungsdaten über den Signalisierungskanal D-Kanal dieser von der Telekommunikationsschnittstellensteuerung BA bereitgestellten Schnittstelle So übertragen.

In einer ersten Ausgestaltung dieses Ausführungsbeispiels werden vor der Übertragung von Nutzdaten über die dritte Schnittstelle IT den Nutzdaten zugeordnete Signalisierungsdaten über den Signalisierungskanal D-Kanal der von der Telekommunikationsschnittstellensteuerung BA bereitgestellten zweiten Schnittstelle So übertragen.

In einer zweiten Ausgestaltung dieses Ausführungsbeispiels enthält die Datenschnittstellensteuerung IE eine Steuervorrichtung zum Freigeben einer Datenübertragung über diese Datenschnittstellensteuerung IE, nachdem eine dieser Datenübertragung zugeordnete Signalisierung über den Signalisierungskanal D-Kanal der zweiten Schnittstelle So erfolgt ist.

Eine dritte, besonders bevorzugte Ausgestaltung dieses Ausführungsbeispiels schließt die beiden, vorstehend jeweils für die erste oder die zweite Ausgestaltung des Ausführungsbeispiels beschriebenen Besonderheiten ein. Nachstehend beschriebene Merkmale treffen auf alle Ausgestaltungen zu.

Als Besonderheit der beschriebenen teilnehmerseitigen Netzabschlußeinheit ist die Verwendung des Signalisierungskanals D-Kanal der zweiten Schnittstelle So zur Übertragung von Signalisierungsdaten für die Übertragung von Nutzdaten sowohl über die zweite Schnittstelle So als auch die dritte Schnittstelle IT anzusehen.

Die Telekommunikationsschnittstellensteuerung BA-Einheit setzt die Nutz- und Sgnalisierungsinformation des Übertragungsrahmens in das So-Format bzw. die Nutz- und Signalisierungsinformation der zweiten Schnittstelle So in den Übertragungsrahmen um. Die Telekommunikationsschnittstellensteuerung BA kann nur auf den ersten und zweiten Nutzdatenzeitschlitz des Übertragungsrahmens zugreifen. Bezüglich der zweiten Schnittstelle So werden folglich in der teilnehmerseitigen Netzabschlußeinheit nur Funktionen der physikalischen Schicht, nach dem OSI-Referenzmodell also Funktionen der Schicht 1, ausgeführt. Die zweite Schnittstelle So stellt teilnehmerseitig alle Merkmale eines ISDN-BA zur Verfügung.

An die dritte Schnittstelle IT kann beispielsweise ein lokales Datennetz LAN mit mehreren Datenanwendungen oder ein Internet-Endgerät angeschlossen sein, aber.auch irgend ein anderes Endgerät mit konstantem Datenstrom. Die dritte Schnittstelle IT kann beispielsweise eine standardisierte Ethernet-Schnittstelle sein. Wird eine auf die dritte Schnittstelle IT zugreifende Datenanwendung aktiv, so baut in dem gezeigten Ausführungsbeispiel die Datenschnittstellensteuerung IE über den D-Kanal der zweiten Schnittstelle So per Signalisierung eine Verbindung auf. Der nachfolgende Informationstransfer erfolgt zwischen der Datenschnittstellensteuerung IE und der Anschlußleitungsschnittstellensteuerung RE. Folglich erfolgt die Signalisierung zwar über die zweite Schnittstelle So, nicht jedoch die Datenübertragung. Dadurch ist die Datenübertragung nicht auf zwei mal 64 kbit/s beschränkt, sondern kann abhängig von der Bandbreite der ersten Schnittstelle LS und folglich der Bandbreite der dritten Schnittstelle IT beispielsweise 12 * 64 kbit/s betragen.

Die Datenschnittstellensteuerung IE der breitbandigen dritten Schnittstelle IT belegt normalerweise nicht den ersten und zweiten Nutzdatenzeitschlitz des Übertragungsrahmens der ersten Schnittstelle LS. Dadurch ist eine Kommunikation von Telekommunikationsanwendungen TE2, TE8 über die zweite Schnittstelle So auch bei Betrieb der dritten Schnittstelle IT möglich. Falls die verbleibenden Nutzdatenzeitschlitze des Übertragungsrahmens der ersten Schnittstelle LS jedoch nicht genug Bandbreite für den Bedarf der über die dritte Schnittstelle IT vorgesehenen Datenübertragung bereitstellen, greift die Datenschnittstellensteuerung IE der breitbandigen dritten Schnittstelle IT auch auf den ersten und/oder zweiten, nicht durch eine bestehende Telekommunikationsanwendungen TE2, TE8 über die zweite Schnittstelle So blockierten Nutzdatenzeitschlitz des Übertragungsrahmens der ersten Schnittstelle LS zu.

### Bezugszeichenliste

- LS: Leitungsschnittstelle
- RE: Rahmeneinheit
- BA: BA-Einheit
- IE: Internet-Einheit
- TE1,TE2,TE8: Telekommunikationsanwendungen
- D-Kanal: Signalisierungskanal
- So: zweite Schnittstelle
- IT: Internet-Terminal

## Patentansprüche

1. Verfahren zum Betreiben einer teilnehmerseitigen Netzabschlußeinheit eines Anschlußleitungsnetzes mit einer ersten, von einer Anschlußleitungsschnittstellensteuerung (RE) bereitgestellten Schnittstelle (LS) zum anschlußleitungsnetzseitigen Senden und Empfangen eines eine Vielzahl (n) von Datenkanälen einschließlich eines Signalisierungskanals enthaltenden Übertragungsrahmens, mit einer zweiten, von einer Telekommunikationsschnittstellensteuerung (BA) bereitgestellten Schnittstelle (So) zum teilnehmerseitigen Bereitstellen von Telekommunikationsnutzdatenkanälen für Telekommunikationsanwendungen (TE2, TE8) sowie eines diesen Telekommunikationsnutzdatenkanälen zugeordneten Signalisierungskanals (D-Kanal), und mit einer dritten, von einer Datenschnittstellensteuerung (IE) bereitgestellten Schnittstelle (IT) zum teilnehmerseitigen Bereitstellen von Datenkanälen für Datenanwendungen, wobei vor der Übertragung von Nutzdaten über die zweite Schnittstelle (So) oder die dritte Schnittstelle (IT) jeweils den Nutzdaten zugeordnete Signalisierungsdaten über den Signalisierungskanal (D-Kanal) der von der Telekommunikationsschnittstellensteuerung (BA) bereitgestellten zweiten Schnittstelle (So) übertragen werden.

2. Verfahren nach Anspruch 1, **dadurch gekennzeichnet, daß** die Datenschnittstellensteuerung (IE) vor der Übertragung von Nutzdaten über die dritte Schnittstelle (IT) die Übertragung von diesen Nutzdaten zugeordneten Signalisierungsdaten über den Signalisierungskanal (D-Kanal) der von der Telekommunikationsschnittstellensteuerung (BA) bereitgestellten Schnittstelle (So) steuert.

3. Verfahren nach Anspruch 1 oder 2, **dadurch gekennzeichnet, daß** teilnehmerseitig in den Telekommunikationsnutzdatenkanälen der zweiten Schnittstelle (So) übertragene Daten im anschlußleitungsnetzseitigen Übertragungsrahmen nur in bestimmten Datenkanälen übertragen werden.

4. Verfahren nach Anspruch 3, **dadurch gekennzeichnet, daß** teilnehmerseitig in den Datenkanälen der dritten Schnittstelle (IT) übertragene Daten im anschlußleitungsnetzseitigen Übertragungsrahmen bevorzugt in freien, nicht für die Übertragung von teilnehmerseitig in den Telekommunikationsnutzdatenkanälen der zweiten Schnittstelle (So) übertragenen Daten vorgesehenen Datenkanälen übertragen werden.

5. Verfahren nach Anspruch 4, **dadurch gekennzeichnet, daß** teilnehmerseitig in den Datenkanälen der dritten Schnittstelle (IT) übertragene Daten auch in den für die Übertragung von teilnenmerseitig in den Telekommunikationsnutzdatenkanälen der zweiten Schnittstelle (So) übertragenen Daten vorgesehenen Datenkanälen übertragen werden, falls im anschlußleitungsnetzseitigen Übertragungsrahmen für diese Daten nicht genug, nicht für die Übertragung von teilnehmerseitig in den Telekommunikationsnutzdatenkanälen der zweiten Schnittstelle (So) übertragene Daten vorgesehene Datenkanäle frei sind.

6. Teilnehmerseitige Netzabschlußeinheit eines Anschlußleitungsnetzes mit einer ersten, von einer Anschlußleitungsschnittstellensteuerung (RE) bereitgestellten Schnittstelle (LS) zum anschlußleitungsnetzseitigen Senden und Empfangen eines eine Vielzahl (n) von Datenkanälen einschließlich eines Signalisierungskanals enthaltenden Übertragungsrahmens, mit einer zweiten, von einer Telekommunikationsschnittstellensteuerung (BA) bereitgestellten Schnittstelle (So) zum teilnehmerseitigen Bereitstellen von Telekommunikationsnutzdatenkanälen für Telekommunikationsanwendungen (TE2, TE8) sowie eines diesen Telekommunikationsnutzdatenkanälen zugeordneten Signalisierungskanals (D-Kanal), mit einer dritten, von einer Datenschnittstellensteuerung (IE) bereitgestellten Schnittstelle (IT) zum teilnehmerseitigen Bereitstellen von Datenkanälen für Datenanwendungen, und mit einer Steuervorrichtung zum freigeben einer Datenübertragung über die Datenschnittstellensteuerung (IE), nachdem eine dieser Datenübertragung zugeordnete Signalisierung über den Signalisierungskanal (D-Kanal) der zweiten Schnittstelle (So) erfolgt ist.

7. Teilnehmerseitige Netzabschlußeinheit nach Anspruch 6, **dadurch gekennzeichnet, daß** die Steuervorrichtung zum freigeben einer Datenübertragung über die Datenschnittstellensteuerung (IE) in dieser Datenschnittstellensteuerung (IE) integriert ist, und daß die Datenschnittstellensteuerung (IE) einen Zugang zum Signalisierungskanal (D-Kanal) der zweiten Schnittstelle (So) hat.

8. Teilnehmerseitige Netzabschlußeinheit nach Anspruch 6 oder 7, **dadurch gekennzeichnet, daß** die zweite Schnittstelle (So) teilnehmerseitig zwei Telekommunikationsnutzdatenkanälen für Telekommunikationsanwendungen (TE2, TE8) bereitstellt.

9. Teilnehmerseitige Netzabschlußeinheit nach Anspruch 8, **dadurch gekennzeichnet, daß** die von der zweiten Schnittstelle (So) bereitgestellten zwei Telekommunikationsnutzdatenkanäle jeweils eine Datenrate von 64 kbit/s haben und daß der von der zweiten Schnittstelle (So) bereitgestellte Signalisierungskanal (D-Kanal) eine Datenrate von 16 kbit/s hat.

10. Teilnehmerseitige Netzabschlußeinheit nach einem der Ansprüche 6 bis 9, **dadurch gekennzeichnet, daß** die ersten Schnittstelle (LS) anschlußleitungsnetzseitig einen Übertragungsrahmen mit einer Vielzahl (n) von Datenkanälen mit einer jeweiligen Datenrate von 64 kbit/s bereitstellt.

## Claims

1. Method for operating a subscriber network terminal of an access line network with a first interface (LS) provided by an access line interface control (RE) for transmitting and receiving at the access line network end a number (n) of data channels including a transmission frame containing a signalling channel, with a second interface (So), provided by a telecommunication interface control (BA), for the provision at the subscriber end of telecommunication useful data channels for telecommunication applications (TE2, TE8), and a signalling channel (D channel) assigned to one of these telecommunication useful data channels, and with a third interface (IT), provided by a data interface control (IE), for the provision at the subscriber end of data channels for data applications, with signalling data assigned to the useful data being transmitted in each case before transmission of useful data via the second interface (So) or the third interface (IT), via the signalling channel (D channel) of the second interface (So) provided by the telecommunication interface control (BA).

2. Method in accordance with claim 1, **characterised in that** before the transmission of useful data via the third interface (IT) the data interface control (IE) controls the transmission of signalling data assigned to this useful data, via the signalling channel (D channel) of the interface (So) provided by the telecommunication interface control (BA).

3. Method in accordance with claims 1 or 2, **characterised in that** data in the access line network transmission frame transmitted at the subscriber end in the telecommunication useful data channels of the second interface (So) is transmitted only in certain data channels.

4. Method in accordance with claim 3, **characterised in that** data in the access line network transmission frame transmitted at the subscriber end in the data channels of the third interface (IT) is preferably transmitted in free data channels not provided for transmission of data transmitted at the subscriber end in the telecommunication useful data channels of the second interface (So).

5. Method in accordance with claim 4, **characterised in that** data transmitted at the subscriber end in the data channels of the third interface (IT) is also transmitted in the data channels provided for the transmission of data transmitted at the subscriber end in the telecommunication useful data channels of the second interface (So), if in the access line network transmission frame there are not sufficient data channels free for this data that are not provided for the transmission of data transmitted at the subscriber end in the telecommunication useful data channels of the second interface (So).

6. Subscriber network terminal of an access line network with a first interface (LS) provided by an access line interface control (RE) for transmitting and receiving at the access line network end a number (n) of data channels including a transmission frame containing a signalling channel, with a second interface (So) provided by a telecommunication interface control (BA) for the provision at the subscriber end of telecommunication useful data channels for telecommunication applications (TE2, TE8) as well as a signalling channel (D channel) assigned to one of these telecommunication useful data channels, with a third interface (IT) provided by a data interface control (IE) for the provision at the subscriber end of data channels for data applications, and with a control device to enable data transmission via the data interface control (IE) after a signalling assigned to this data transmission has taken place via the signalling channel (D channel) of the second interface (So).

7. Subscriber network terminal according to claim 6, **characterised in that** the control device for enabling data transmission via the data interface control (IE) is integrated into this data interface control (IE) and that the data interface control (IE) has access to the signalling channel (D channel) of the second interface (So).

8. Subscriber network terminal according to claims 6 or 7, **characterised in that** the second interface (So) at the subscriber end provides two telecommunication useful data channels for telecommunication applications (TE2, TE8).

9. Subscriber network terminal according to claim 8, **characterised in that** the two telecommunication useful data channels provided by the second interface (So) each have a data rate of 64 kbit/s and that the signalling channel (D channel) provided by the second interface (So) has a data rate of 16 kbit/s.

10. Subscriber network terminal in accordance with one of claims 6 to 9, **characterised in that** the first interface (LS) provides an access line network transmission frame with a number (n) of data channels each with a data rate of 64 kbit/s.

## Revendications

1. Procédé pour faire fonctionner une unité terminale de réseau d'un réseau de lignes de raccordement située côté abonné, avec une première interface (LS), mise à disposition par une commande d'interface de lignes de raccordement (RE), pour l'émission et la réception, côté réseau de lignes de raccordement, d'une trame de transmission contenant une pluralité (n) de canaux de données y compris un canal de signalisation, avec une deuxième interface (So), mise à disposition par une commande d'interface de télécommunication (BA), pour la mise à disposition, côté abonné, de canaux de données utiles de télécommunication pour des applications de télécommunication (TE2, TE8) ainsi que d'un canal de signalisation (canal D) affecté à ces canaux de données utiles de télécommunication, et avec une troisième interface (IT), mise à disposition par une commande d'interface de données (IE), pour la mise à disposition, côté abonné, de canaux de données pour des applications «données», des données de signalisation, respectivement affectées aux données utiles, étant transmises par l'intermédiaire du canal de signalisation (canal D) de la deuxième interface (So) mise à disposition par la commande d'interface de télécommunication (BA) et ce, avant la transmission de données utiles via la deuxième interface (So) ou la troisième interface (IT).

2. Procédé selon la revendication 1, **caractérisé en ce que** la commande d'interface de données (IE) commande, avant la transmission de données utiles via la troisième interface (IT), la transmission de données de signalisation, affectées à ces données utiles, par l'intermédiaire du canal de signalisation (canal D) de l'interface (So) mise à disposition par la commande d'interface de télécommunication (BA).

3. Procédé selon la revendication 1 ou 2, **caractérisé en ce que** des données transmises côté abonné dans les canaux de données utiles de télécommunication de la deuxième interface (So) sont uniquement transmises dans des canaux de données déterminés dans la trame de transmission côté réseau de lignes de raccordement.

4. Procédé selon la revendication 3, **caractérisé en ce que** des données transmises dans les canaux de données de la troisième interface (IT) côté abonné sont transmises, dans la trame de transmission côté réseau de lignes de raccordement, de préférence dans des canaux de données libres non prévus pour la transmission de données transmises dans les canaux de données utiles de télécommunication de la deuxième interface (So) côté abonné.

5. Procédé selon la revendication 4, **caractérisé en ce que** des données transmises dans les canaux de données de la troisième interface (IT) côté abonné sont également transmises dans les canaux de données prévus pour la transmission de données transmises dans les canaux de données utiles de télécommunication de la deuxième interface (So) côté abonné, dans le cas où, dans la trame de transmission côté réseau de lignes de raccordement, il n'y a pas suffisamment, pour ces données, de canaux de données libres non prévus pour la transmission de données transmises dans les canaux de données utiles de télécommunication de la deuxième interface (So) côté abonné.

6. Unité terminale de réseau d'un réseau de lignes de raccordement située côté abonné, avec une première interface (LS), mise à disposition par une commande d'interface de lignes de raccordement (RE), pour l'émission et la réception, côté réseau de lignes de raccordement, d'une trame de transmission contenant une pluralité (n) de canaux de données y compris un canal de signalisation, avec une deuxième interface (So), mise à disposition par une commande d'interface de télécommunication (BA), pour la mise à disposition, côté abonné, de canaux de données utiles de télécommunication pour des applications de télécommunication (TE2, TE8) ainsi que d'un canal de signalisation (canal D) affecté à ces canaux de données utiles de télécommunication, et avec une troisième interface (IT), mise à disposition par une commande d'interface de données (IE), pour la mise à disposition, côté abonné, de canaux de données pour des applications «données», et avec un dispositif de commande pour débloquer une transmission de données par l'intermédiaire de la commande d'interface de données (IE) après qu'une signalisation affectée à cette transmission de données a eu lieu par l'intermédiaire du canal de signalisation (canal D) de la deuxième interface (So).

7. Unité terminale de réseau située côté abonné selon la revendication 6, **caractérisée en ce que** le dispositif de commande pour débloquer une transmission de données par l'intermédiaire de la commande d'interface de données (IE) est intégré dans cette commande d'interface de données (IE) et **en ce que** la commande d'interface de données (IE) a un accès au canal de signalisation (canal D) de la deuxième interface (So).

8. Unité terminale de réseau située côté abonné selon la revendication 6 ou 7, **caractérisée en ce que** la deuxième interface (So) met à disposition, côté abonné, deux canaux de données utiles de télécommunication pour des applications de télécommunication (TE2, TE8).

9. Unité terminale de réseau située côté abonné selon la revendication 8, **caractérisée en ce que** les deux canaux de données utiles de télécommunication mis à disposition par la deuxième interface (So) ont respectivement un débit de données de 64 kbits/s et **en ce que** le canal de signalisation (canal D) mis à disposition par la deuxième interface (So) a un débit de données de 16 kbits/s.

10. Unité terminale de réseau située côté abonné selon l'une des revendications 6 à 9, **caractérisée en ce que** la première interface (LS) met à disposition, côté réseau de lignes de raccordement, une trame de transmission avec une pluralité (n) de canaux de données avec un débit de données respectif de 64 kbits/s.
